# EUROPEAN PATENT APPLICATION

(11) **EP 0 569 316 A2**
(43) Date of publication of application: **10.11.1993**
(21) Application number: 93500058.8
(22) Date of filing: 29.04.1993
(51) Int. Cl.: G06F 1/00, B41J 29/15, G06F 1/16

(54) **Revertible ergonomic supporter of documents for personal computer display or terminal video (TTY)**

(30) Priority: 30.04.1992 ES 9201400 U
(71) Applicant: Alonso Rodriguez, Jose Antonio, E-28005 Madrid (ES); Arcienaga Morales, Antonio Adrian, E-28005 Madrid (ES)
(72) Inventor: Alonso Rodriguez, Jose Antonio, E-28005 Madrid (ES); Arcienaga Morales, Antonio Adrian, E-28005 Madrid (ES)

(57) **Abstract**

Revertible ergonomic supporter of documents for computer display or terminal video (tty).
It is a device consisting in two parts: the first (2) dedicated to get the double aim of support body at display case and fixed rotational pivot; and the second (1) which purpose is to define a twice alternative working surface, easy to adjust in equidistance with the display to the operator of it. By its design, the device gets the greatest closeness and parallelism between text-document and display, allowing an ergonomic alternacy during working cycle at both side of such display.
The device has applications in data entry or other operations with computer display or terminal video.

## Description

The present invention refers to a new prototype of a revertible ergonomic supporter of documents, applied to data process and text reading jobs, for personal computer (PC) display or terminal video (tty).

Since its introduction in 1950, displays -developed in the Massachussets Institute of Technology (EE.UU.) like visual device controlled by computer- have become slowly in a usual instruments for data's entry and exit interface in computers, giving place to a set of risk factors in working conditions for different operators.

Between interesting risk factors for present invention, it deserves to stand out operators' visual disturbance and muscle-skeletal troubles. The first refers to eye's accomodation mechanism through the action of ciliary muscles (inside of eye). These modify crystalline's curvature due to constant change of distances for viewing objects -text and screen-, producing in this way visual fatigue. Besides, in display working places are performed other jobs requiring different ilumination levels, upper than recommended 300 lux for the first kind of job. All these circumstances amplify visual fatigue due to repeating eye's movement among areas with different luminic intensities. This last produces more effort to inside muscles responsible of regular opening of eye's pupil. The second type of trouble refers mainly to frequent and repeating movement of rotation and flexion of the operator's head in the same sense, between display and working document. For these reasons, it is advisable a double alternative working surface, closed to both display sides, and likewise adjustable in equidistance with display to the operator, specially in data entry, text correction, etc.

In case of existing supports and lecterns, these are not practical for generating this double alternative surface, parallel to display and likewise of easy and adjust equidistance to the observer. Then, these lecterns do not consider the necessary conjoint solution of visual fatigue and muscle-skeletal problems, with -furthermore- a device simple and easy to handle.

The present invention comes to solve mentioned problems: the rotational pivot of the double alternative working surface warrants not only the greatest capable closeness text-display, but also an almost millimetrical adjust for solving conjunctly text-screen equidistance to operator (minimizing in this form visual fatigue), eliminating head flexion and minimizing at its limit head rotation. Furthermore, head muscles are lightened due to working document's ergonomic alternative position, at one and other display side. Then, this document supporter's versatility that can be very easily put on at both display side in alternative way during working cycle, combined conjunctly with greatest closeness, parallelism and text-display equidistance, gives new different elements to present invention. By other hand, its easy putting on and putting off (Draw 1) and its movement capacity on a 180° angle (Draw 2), allow important benefits and flexibility of space and handling. Besides, the device has simple manufacturing in two simple bodies, without hinges, arms or other bonding elements between them.

This invention is a device consisting in two parts: the first as fixer element (2) has also the function of fixed rotational pivot. This fixer element (2), with "L" form, is fixed in an autoadhesive way, rapidly and alternatively, at right or left upper vertex of display cage, as is shown in Draw 1. The possibility of counting with elements that have the properties of gluing and ungluing without losing them, recommends this operational way of fixing.

The second part (1) or support itself is a flat and rigid body of low thick, made of suitable material according to its weight for better appliance of the same on the fixer and rotational point. Locating at almost total closeness and parallelism with screen, it (1) allow by this reason a simple and highly adjustable regulation -in equidistance with the display- to operator. For this aim, it could be used by both sides. It has on one edge two ribs (8) allowing an easy chasing with fixer element (2) which likewise is its rotational pivot.

Like complement elements, this second part (1) presents a line pointer for reading (5) and two secondary supports -a fixed clamp (6) capable of being used by both sides and a bottom support (7)- for data documents or sheets. At the bottom there is a small rib (3), helping to produce cross and compression stresses in the adherent surfaces of former part (2), with the possibility of being fixing point and supplemental rotational pivot of the second part (1). Furthermore, when weight of the documents makes it advisable, there is optionally a secondary fixer element (10), also glued in an autoadhesive way to the bottom point of screen case, according to rib's height (3). It (10) also has the function of secondary rotational pivot, interchangeable at both case's sides. The two complementary supports (6) and (7) are thought for this last circumstances.

One making form (for this invention) is shown in Drawn 1, on which autoadhesive fixing of part (2) was obtained by two ribbons (4) with enough adherent capacity to support cross stress. This is generated by slight weight in cantilever of supporter itself plus data sheets. Adhesiveness is favoured by compression stress producing by applied weight on ribbons (4). Such form of fixing does not exhaust other existing possibilities on this way of fastening which are contained in the present invention, and allows -by its remarkable simplicity for handling- an almost instantaneous alternative change of support from one screen side to the other. The second part (1), designed in this achievement in triangular form, presents conventional elements of sheet supports and of line pointer (5), with the difference that design allows them using by both sides of this second part. For this aim, clamp (6) consists in a double side fixed clasp, pointer (5) presents normal spring device which fastens and sets it adjustable to guide (9) existing at both sides, and bottom support (7) has flat rib covering both sides of body (1).

Fast and growing difussion of computers and intensive operation of them by screen -specially graphic interface software or data entry- in most economic and social level of nowadays life allow to assess positively industrial and commercial interests on present invention,which is focused on a demand sector considered one of the most dynamics in economics. Industrial interest also bases on existence of serial production process with relative low cost polymers, for example cast by transferring, by compression, by injection, etc. All of them are able of being applied due to simple design of the present invention's components, which make possible the use of mentioned manufacturing methods, with minimum assembly operations. It gives competitive advantage for production process cost.

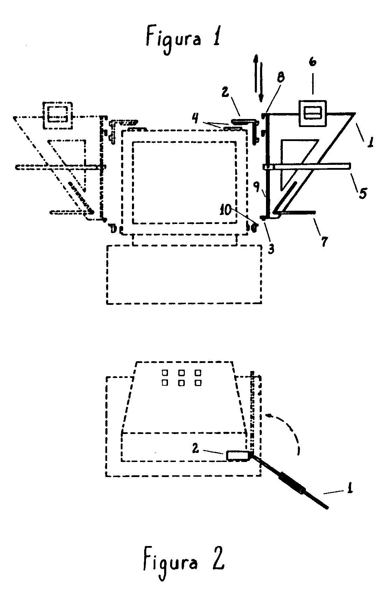

## Claims

It is claimed as proper and new invention the property and sole exploitation right of:

1. A revertible ergonomic supporter of documents for personal computer (PC) display or terminal video (tty), characterised by the definition of a double alternative working surface, close and parallel at both sides of display and adjustable in equidistance with the last to the operator of the same. It is a device consisting in two bodies: the fixature element (2) and the revertible supporter of document (1) itself.

2. A revertible ergonomic supporter of documents according to 1, characterised by its fixature element (2), with "L", form, fixed in an autoadhesive way at one of the upper external vertex of PC's display or terminal video case, and easy to put on and put off at both upper external vertex in alternative way during working cycle, being likewise a fixed rotationalpivot.

3. A revertible ergonomic supporter of documents according to 1 and 2, characterised for its double alternative working surface is obtained through a document supporter (1) itself, able of being used alternatively with this aim at one or other side of PC's display or video terminal (tty) case. Consisting in a flat body, such supporter (1) has chasing ribs (8) on the fixer body (2), which allow an adjustable rotation and the aim of greatest capable closeness and ergonomic parallelism between working document and display.

4. A revertible ergonomic supporter of documents according to 1, 2 and 3, characterised -optionally- by secondary fixer element (10), likewise fixed supplemental rotational pivot, consisting in a slab with one flange and fixed in autoadhesive way to the bottom side of external PC's display or terminal video (tty) case. In this supplemental fixer element (10) chases the bottom rib (3) of revertible supporter (1) itself.

5. A revertible ergonomic supporter of documents for PC's display or terminal video (tty), such and so it is described in the body of this memory and claims consisting in five written pages by one side and one sheet with two draws.
